# EUROPEAN PATENT SPECIFICATION

(11) **EP 3 017 202 B1**
(45) Date of publication and mention of the grant of the patent: **18.04.2018**
(21) Application number: 14820203.9
(22) Date of filing: 11.06.2014
(51) Int. Cl.: F16B 13/06, F16B 39/02, B60G 7/02, F16F 1/34

(54) **DEFORMABLE SLIDING BUSHING**
VERFORMBARE SCHIEBEHÜLSE
DOUILLE COULISSANTE DÉFORMABLE

(30) Priority: 05.07.2013 SE 1300472
(43) Date of publication of application: 11.05.2016
(73) Proprietor: Scania CV AB, 151 87 Södertälje (SE)
(72) Inventor: ENGMAN, Mats, S-152 52 Södertälje (SE); HAGSJÖ, Jonas, S-141 69 Huddinge (SE)
(74) Representative: Scania CV AB
(86) International application number: PCT/SE2014/050705
(87) International publication number: WO 2015/002592

(56) References cited:
- EP-A1- 0 715 086
- DE-A1- 3 228 051
- DE-A1- 3 318 288
- FR-A1- 2 950 117
- JP-A- 2008 057 731
- US-A- 1 365 719
- US-A- 1 607 205
- US-A- 2 476 561
- US-A- 4 721 326
- US-A- 5 861 557
- US-B1- 6 478 521
- US-B2- 6 609 866

## Description

### TECHNICAL FIELD

The present invention relates to a vehicle arrangement comprising a bushing for fitting of components. The invention relates in particular to a sliding bushing consisting of metal and so configured that its middle shell surface expands radially outwards when a clamping force is applied to the bushing in an axial direction, so that the bushing is clamped in a desired position. The invention is particularly intended for heavy commercial vehicles but may of course be employed in different vehicles and other applications. It relates also to a vehicle equipped with a sliding bushing according to the invention.

### STATE OF THE ART

Sliding bushings or sliding sleeves have long been known per se and have for example been used to facilitate the fitting of a spring or a reaction rod, e.g. to a wheel arrangement on a vehicle. The bushing is with advantage moved away before the final fitting, e.g. to make it possible for the spring or the reaction rod to be put in place. A bolt or similar threaded connection is then used to draw the bushing into position and achieve a desired radial clamping force between it and adjacent chassis components.

A disadvantage of known sliding bushings is that no locking in an axial direction can be achieved, which means that they can in practice not absorb axial loads.

Attempts have previously been made to manufacture bushings/sleeves or similar annular elements which are clamped axially, e.g. by means of a threaded connection, and are deformed by tightening of the threaded connection with a view to reliably ensuring that it will remain tightened during future use, or in any case to achieve better frictional locking of the bushings/sleeves to adjacent component surfaces.

Patent specification FR2950117 describes for example a cylindrical sleeve with two ends, which sleeve is of relatively large material thickness and has a middle section with a smaller material thickness. The middle section is described as an elastic portion which becomes deformed when the sleeve is compressed axially by a threaded connection. Before use, the sleeve is placed in a substantially cylindrical hole. In an undeformed state there is a clearance (J) between the inside wall surface of the hole and the middle section of the sleeve, but tightening of the threaded connection causes the middle section to be pressed against the inside wall of the hole, resulting in a friction force between the bushing and the wall surface. The object of this solution is not to absorb significant axial forces.

In the present invention the only locking of the bushing is by radial expansion and our solution needs no support ring (35) to prevent any collapse during tightening of the clamping connection.

Patent specification US6478521 refers to a spring washer shaped like a "sleeve" and forming part of a threaded connection, e.g. for fitting a vehicle wheel. In some of the embodiments the material thickness of the spring washer sleeve is greater at the ends of the sleeve than in its middle section, but this does not seem to be generally necessary for the solution described.

Patent specification EP0161916 describes a screw arrangement with an expander sleeve made of rubberlike material. The rubber sleeve has no internal weakenings or recesses to facilitate deformation, but is nevertheless pressed radially outwards when an axial load is applied to its end surfaces.

US5861557A, US1365719A and US2476561A disclose similar sleevelike elements used in other applications, whereby said elements expand radially outwards when an axial clamping force is applied to the element's end surfaces.

Furthermore, each of US4721326A, US1607205A and DE3228051A discloses a relevant vehicle arrangement, whereby a bushing comprising a sleevelike element with a profile which is symmetrical in cross-section, is used for clamping the fitting of a suspension component on a bracket of a vehicle chassis. Prior art thus does not refer to any sliding bushing which, when used in an arrangement for a vehicle as claimed, achieves an axial close fit and locking to surrounding component surfaces and is so configured that its outer surface, at its middle section, bends outwards and assumes a curved shape so that the bushing acquires a larger diameter in its middle section than at its end sections when it is clamped in an axial direction.

### SUMMARY OF THE INVENTION

The invention is defined by the appended claims.

One object of the invention is to solve the abovementioned problems and propose a sliding bushing which, when used in an arrangement for a vehicle as claimed, is deformable so that its middle section or shell surface expands radially outwards when an axial clamping force is applied to its end surfaces.
A further object of the invention is that the sliding bushing be capable of becoming deformed in such a way that its outer shell surface presses so hard against surrounding wall surfaces that it is clamped in a desired position.
A further object of the invention is that the sliding bushing be capable of being clamped so hard in a desired position that it can absorb a substantial axial load. According to the invention, the sliding bushing is so configured that deformation of its middle shell surface is facilitated.
A further object of the invention is that it be functional and easy and inexpensive to manufacture.
These and further objects and advantages are achieved according to the invention defined by the features indicated in the characterising part of the independent claim 1.
The arrangement comprising a sliding bushing according to the invention is intended for vehicles, and particularly for heavy commercial vehicles such as trucks and buses, where there is a need to reliably ensure that a threaded connection remains tightened during use and/or that a frictional lock is achieved between the bushing and adjacent component surfaces. Vehicles other those indicated above might be cars, or even contractor machines, boats, aircraft, watercraft or the like, which however do not fall within the scope of the invention as claimed. The sliding bushing is primarily intended for fitting of components, e.g. in a vehicle, as when fitting a spring or a reaction rod in a wheel arrangement on a truck or bus, and comprises a sleevelike element with a profile which is substantially symmetrical in cross-section. The bushing consists with advantage of metal and is so configured that its shell surface expands radially outwards when a clamping force is applied to the bushing in its axial direction. Such a bushing or sleeve may with advantage be combined with a bolt or a threaded connection. The bushing is in principle configured as a sleeve with greater material thickness at its ends than in its middle section. An axial cross-section through the bushing may be described as substantially U-shaped. The cavity within the bushing is widest in its middle section, which means that the material is thinnest at the middle of the bushing. The bushing is fitted by being moved into a substantially circular hole in the chassis component in which it is to be fitted. Clamping the bushing, e.g. by tightening the threaded connection, will result in its deformation such that its outer shell surface, mainly in its middle portion, bulges radially outwards to assume a curved shape. The bushing is compressed somewhat in the axial direction and acquires in a clamped state a larger diameter in its middle portion than at its outer ends. The bushing will thus be locked against the surrounding components by the resulting friction between it and the wall surface of the hollow space. Clamping will also cause the bushing to be locked so hard in its axial direction that it can absorb significant axial loads. The end surfaces of the bushing or sleeve may also with advantage be given a certain funnel-like slope in the radial direction in order further to promote or facilitate the radial expansion of its middle portion when the threaded connection is tightened in the axial direction.

An important advantage of the configuration according to the invention is that the bushing or sleeve is securely locked in the axial direction and can therefore absorb significant axial loads.

Another important advantage of the solution according to the invention is that it does not entail any reconfiguration of other existing surrounding components and will be easy to adapt to existing technology and nevertheless achieve lockability in the axial direction. This fact makes it easier and less expensive to implement the solution in today's production and vehicles.

Further features and advantages of the invention are indicated by the more detailed description of the invention set out below and the attached drawings and other claims.

### BRIEF LIST OF DRAWINGS

The invention is described in more detail below in the form of some preferred embodiment examples with reference to the attached drawings.
**Figure 1** depicts a perspective view as seen from in front of parts of a truck chassis and shows more specifically how springs/reaction rods are placed, e.g. in the truck's wheel arrangement.
**Figure 2** depicts a cross-section of the sliding bushing according to the invention, placed in a desired position relative to the truck chassis before the final fitting of a reaction rod, i.e. before the tightening of the threaded connection.
**Figure 3** depicts a cross-section of the sliding bushing according to Figure 2 but with the threaded connection tightened so that the bushing has expanded radially and become locked, clamped, to the adjacent chassis component, here a bracket.
**Figure 4** depicts the sliding bushing alone in more detail, showing more clearly the recess and one oblique or funnel-like end surface of the bushing.

### DESCRIPTION OF PREFERRED EMBODIMENTS

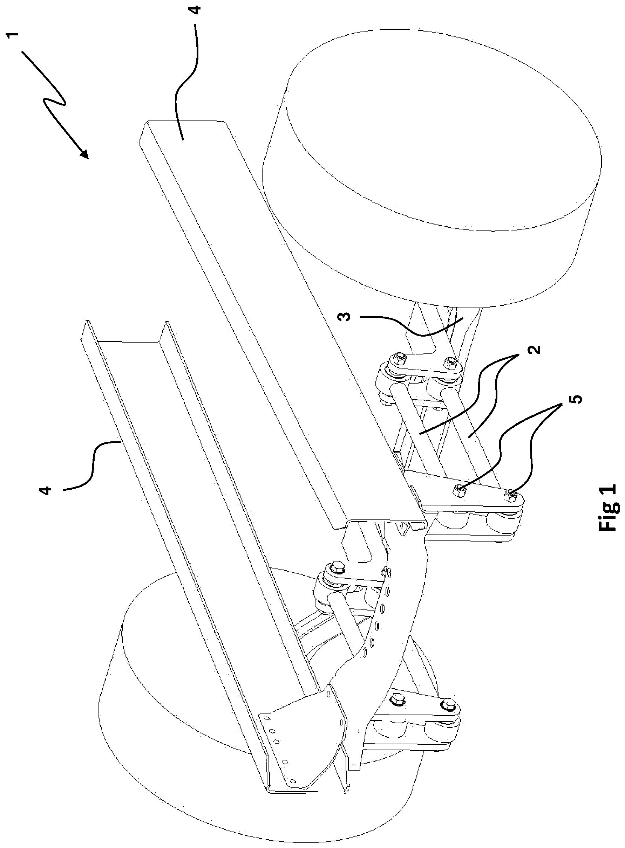

**Figure 1** depicts a perspective view as seen from in front of a truck chassis 1 and more specifically shows reaction rods 2 placed between the wheelshaft 3 and the chassis frame members 4. In this configuration, sliding bushings (not visible) are used with advantage to make fitting easier. They are here used to facilitate the fitting of the reaction rods in the vehicle's wheel arrangement. The bushing is moved away before the final fitting, e.g. to make it possible to put the reaction rod in place. This facilitates correct positioning of the bushing and the components which are to be fitted together. A threaded connection 5 is then used to draw the bushing back into position and achieve a desired radial clamping force when the threaded connection is tightened.

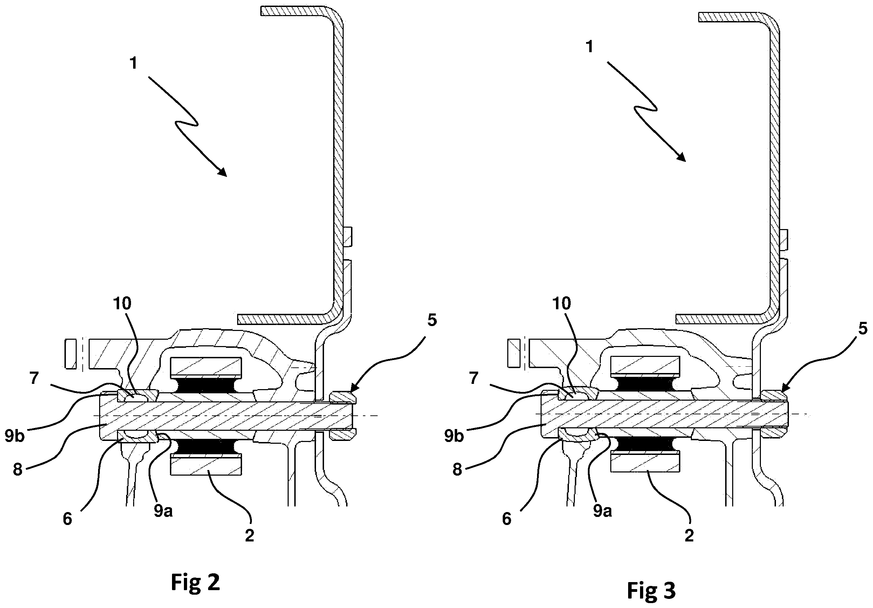

**Figure 2** depicts a cross-section through a sliding bushing 6 fitted to a reaction rod 2 belonging to part of a truck chassis 1, before the final fitting of the bushing, i.e. before the tightening of the threaded connection 5. The drawing shows the bushing 6 provided with a recess 7 on its inside, on the side which faces towards the bolt 8. Material in the recess 7 has here been removed. The bushing is also provided with an oblique end surface 9a which in this case faces towards the reaction rod 2, i.e. towards the right in the diagram. This oblique or funnel-like end surface 9a facilitates/promotes the radial expansion of the middle of the bushing when the threaded connection is tightened.

**Figure 3** depicts a cross-section of the sliding bushing 6 according to Figure 2, but with the threaded connection 5 tightened so that the bushing's middle shell surface 10 has expanded radially and has locked the bushing to adjacent chassis components 11. The bushing is thus locked in the respective desired position, enabling it to absorb significant axial loads.

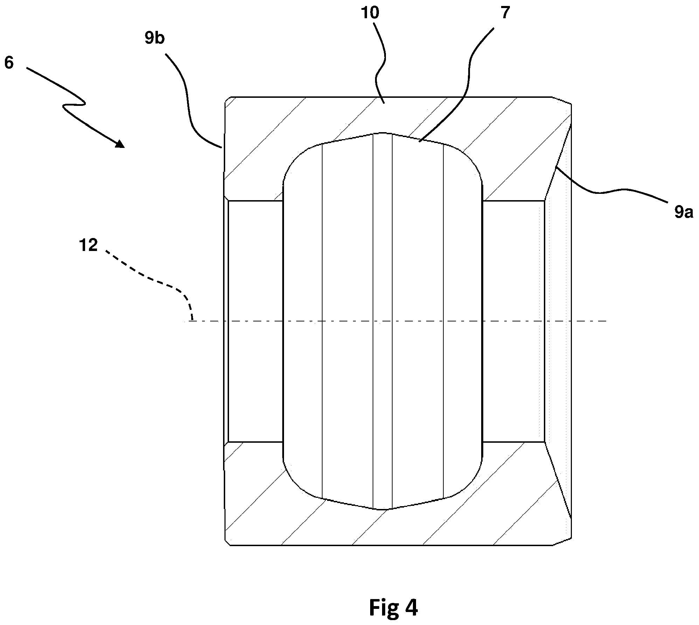

**Figure 4** depicts in more detail a cross-section through the sliding bushing 6 according to the invention. The bushing is thus provided with a recess 7 so situated within the sleevelike element that the recess is open and faces towards the bushing's centreline 12, i.e. the recess will face towards the threaded connection's bolt which is inserted through the bushing. Material in the bushing has therefore here been removed, e.g. by machining. The bushing is also provided with an oblique or funnel-like outer end surface 9a, in this case at the end which faces towards the right in the diagram. This oblique funnel-like end surface 9a facilitates/promotes the radial expansion of the bushing's middle shell surface 10 when the axially positioned threaded connection 5 is tightened.

The above description is primarily intended to facilitate understanding of the invention and is of course not confined to the embodiments indicated, since other variants of the invention are also possible and conceivable within the scope of the inventive concept and the protective scope of the claims set out below.

## Claims

1. An arrangement for a vehicle comprising a reaction rod (2) situated between a wheelshaft (3) and chassis frame members(4)in a vehicle, the reaction rod (2) comprising end sections with threaded connections (5) intended for fitting the reaction rod (2) onto a chassis component, and a bushing (6) comprising a sleevelike element with a profile which is substantially symmetrical in cross-section the bushing (6) having an end surface (9a) facing the reaction rod (2),
**characterised**
**in that** the bushing (6) is provided with an internal recess (7) situated between its two axial end surfaces (9a,b), preferably symmetrically at its middle portion, so that the bushing's middle shell surface (10) expands radially outwards when an axial clamping force is applied to the bushing's end surfaces (9a,b) so that the bushing (6) is wedged in its final fitting position and can therefore absorb axial loads during use.

2. An arrangement according to claim 1,
**characterised**
**in that** the recess (7) is substantially U-shaped and open inwards towards the notional centreline (12) of the sliding bushing (6).

3. An arrangement according to claim 1 or 2,
**characterised**
**in that** the material thickness of the middle portion of the bushing (6) is preferably substantially half that of the bushing's outer ends (9a,b).

4. An arrangement) according to any one or more of the foregoing claims,
**characterised**
**in that** at least one end surface (9a) of the bushing (6) runs obliquely or is funnel-like to make it easier for the bushing's middle shell surface (10) to expand when an axial clamping force is applied.

5. An arrangement according to any one or more of the foregoing claims,
**characterised**
**in that** the bushing (6) is made of metal.

## Patentansprüche

1. Anordnung für ein Fahrzeug, umfassend eine Reaktionsstange (2), welche zwischen einer Radachse (3) und einem Fahrgestellelement (4) in einem Fahrzeug gelegen ist, wobei die Reaktionsstange (2) Endabschnitte mit Gewindeverbindung (5), welche zum Anpassen der Reaktionsstange (2) auf eine Fahrgestellkomponente vorgesehen sind, und eine Hülse (6) umfasst, die ein ärmelartiges Element mit einem Profil aufweist, welches im Querschnitt im Wesentlichen symmetrisch ist, wobei die Hülse (6) eine Endoberfläche (9A) aufweist, die der Reaktionsstange (2) zugewandt ist,
**dadurch gekennzeichnet, dass** die Hülse (6) mit einer internen Aussparung (7) versehen ist, welche zwischen deren zwei axialen Endoberflächen (9A, B), bevorzugt symmetrisch an seinem Mittelteil, angeordnet ist, so dass die Mittelschalenoberfläche (10) der Hülse sich radial auswärts ausdehnt, wenn eine axiale Klemmkraft auf die Endoberflächen (9A, B) der Hülse wirkt, so dass die Hülse (6) in ihrer finalen Passposition eingeklemmt ist und dadurch axiale Belastungen während einer Benutzung absorbieren kann.

2. Anordnung nach Anspruch 1,
**dadurch gekennzeichnet, dass** die Aussparung (7) im Wesentlichen U-förmig ausgebildet ist und nach innen zu der angenommenen Mittellinie (12) der Schiebehülse (6) offen ist.

3. Anordnung nach Anspruch 1 oder 2,
**dadurch gekennzeichnet, dass** die Materialstärke des Mittelteils der Hülse (6) bevorzugt im Wesentlichen halb so groß ist wie die des äußeren Endes (9A, B) der Hülse.

4. Anordnung nach einem oder mehreren der vorhergehenden Ansprüche,
**dadurch gekennzeichnet, dass** mindestens eine Endoberfläche (9A) der Hülse (6) quer verläuft oder trichterartig ausgebildet ist, um eine Ausdehnung der Mittelschalenoberfläche (10) der Hülse zu erleichtern, wenn eine axiale Klemmkraft anliegt.

5. Anordnung nach einem oder mehreren der vorhergehenden Ansprüche,
**dadurch gekennzeichnet, dass** die Hülse (6) aus Metall hergestellt ist.

## Revendications

1. Agencement pour un véhicule, comprenant une tige de réaction (2) située entre un arbre de roue (3) et des éléments de bâti de châssis (4) dans un véhicule, la tige de réaction (2) comprenant des sections d'extrémité avec des liaisons filetées (5) conçues pour adapter la tige de réaction (2) sur un composant de châssis, et un coussinet (6) comprenant un élément en forme de manchon avec un profil qui est sensiblement symétrique en section transversale, le coussinet (6) ayant une surface d'extrémité (9a) qui fait face à la tige de réaction (2), **caractérisé en ce que** le coussinet (6) est muni d'une cavité interne (7) située entre ses deux surfaces d'extrémité axiales (9a, b), de préférence de façon symétrique dans sa partie médiane, de telle sorte que la surface d'enceinte médiane (10) du coussinet subisse une expansion radiale vers l'extérieur lorsqu'une force de serrage axiale est appliquée aux surfaces d'extrémité (9a, b) du coussinet, de telle sorte que le coussinet (6) soit coincé dans sa position d'adaptation finale et qu'il puisse par conséquent absorber des charges axiales durant l'utilisation.

2. Agencement selon la revendication 1, **caractérisé en ce que** la cavité (7) est sensiblement en forme de U et ouverte vers l'intérieur, vers la ligne centrale théorique (12) du coussinet coulissant (6).

3. Agencement selon la revendication 1 ou 2, **caractérisé en ce que** l'épaisseur de matériau de la partie médiane du coussinet (6) est, de préférence, sensiblement la moitié de celle des extrémités extérieures (9a, b) du coussinet.

4. Agencement selon l'une quelconque ou plusieurs des revendications précédentes, **caractérisé en ce qu'**au moins une surface d'extrémité (9a) du coussinet (6) s'étend en oblique ou est en forme d'entonnoir, de façon à rendre plus facile à la surface d'enceinte médiane (10) du coussinet de subir une expansion lorsqu'une force de serrage axiale est appliquée.

5. Agencement selon l'une quelconque ou plusieurs des revendications précédentes, **caractérisé en ce que** le coussinet (6) est réalisé en métal.
